# EUROPÄISCHE PATENTSCHRIFT

(11) **EP 0 728 321 B1**
(45) Veröffentlichungstag und Bekanntmachung des Hinweises auf die Patenterteilung: **28.01.1998**
(21) Anmeldenummer: 95900615.6
(22) Anmeldetag: 10.11.1994
(51) Int. Cl.: G02B 6/44

(54) **NICHTAUFSCHWIMMENDES OPTISCHES SEEKABEL**
NON-RISING SUBMARINE OPTICAL CABLE
CABLE OPTIQUE SOUS-MARIN NON FLOTTANT

(30) Priorität: 12.11.1993 DE 4338761
(43) Veröffentlichungstag der Anmeldung: 28.08.1996
(73) Patentinhaber: SIEMENS AKTIENGESELLSCHAFT, 80333 München (DE)
(72) Erfinder: POKORNY, Lothar, D-96450 Coburg (DE); SCHREY, Wolfgang, D-96465 Neustadt (DE); PRIESNITZ, Ulrich, D-96450 Coburg (DE); OESTREICH, Ulrich, D-81375 München (DE); SCHNEIDER, Lienhard, D-96472 Rödental (DE)
(86) Internationale Anmeldenummer: DE9401328
(87) Internationale Veröffentlichungsnummer: WO9513556

(56) Entgegenhaltungen:
- DE-A- 3 403 086
- GB-A- 2 158 264
- US-A- 4 765 711
- US-A- 5 054 881

## Beschreibung

Die Erfindung betrifft ein nicht aufschwimmendes optisches Seekabel mit einem Kabelaufbau, dessen Grundstruktur wegen des niedrigen spezifischen Gewichtes ein Aufschwimmen nicht verhindert, wobei im Kabel mindestens ein Zusatzelement vorgesehen ist, dessen spezifisches Gewicht > 2,1 g/cm³ gewählt ist und das ausreichend Gewicht aufweist, um das Aufschwimmen des Kabels zu verhindern.

Ein Seekabel dieser Art ist aus der US-A-4,765 711 bekannt. Wenn extrem leicht gebaute optische Seekabel verwendet oder wenn metallfreie optische Seekabel verlegt werden, dann hat die jeweilige Grundstruktur derartiger Kabel vielfach ein spezifisches Gewicht, durch das ein Aufschwimmen nicht mehr verhindert wird. Unter Grundstruktur ist dabei diejenige Struktur zu verstehen, die zur Erfüllung der jeweiligen Aufgaben - ausgenommen die Verhinderung des Aufschwimmens - benötigt wird. Bei dem bekannten Kabel werden Metallpartikel in das Kabel eingefügt, um ein Aufschwimmen zu verhindern. Derartige Metallpartikel sind relativ schwer verarbeitbar und im allgemeinen nicht korrosionsbeständig.

Aus der DE 34 03 086 A1 ist ein zugfestes optisches Seekabel bekannt, bei dem auf einen den Lichtwellenleiter enthaltenden Innenmantel mindestens eine Lage von Stahldrähten aufgeseilt ist. Außen auf diesen Stahldrähten ist ein Außenmantel aus Kunststoffmaterial angebracht. Derartige mit Metallbewehrungen versehene Seekabel haben ein so hohes spezifisches Gewicht, daß ein Aufschwimmen des Kabels auf dem Meeresgrund verhindert wird, d.h. beim Einbetten in Sand oder Schlick bleibt das Kabel in dieser von außen durch die darüberliegende Sand- oder Schlickschicht geschützten Lage liegen. Sand- oder Schlick haben ein spezifisches Gewicht in der Größenordnung von 1,6 - 2,1 g/cm³.

Der Erfindung liegt die Aufgabe zugrunde, ein optisches Seekabel zu schaffen, bei dem in einfacher Weise ein Aufschwimmen verhindert wird. Gemäß der Erfindung wird diese Aufgabe bei einem Seekabel der eingangs genannten Art dadurch gelöst, daß das Zusatzelement mindestens ein Metalloxid enthält.

Das bei der Erfindung vorgesehene Zusatzelement in Form eines Metalloxides bewirkt, daß das Seekabel in einfacher Weise hergestellt werden kann. Da keine Metallteile verwendet werden, ist auch die Möglichkeit einer Ortung verringert.

Weiterbildungen der Erfindung sind in Unteransprüchen wiedergegeben.

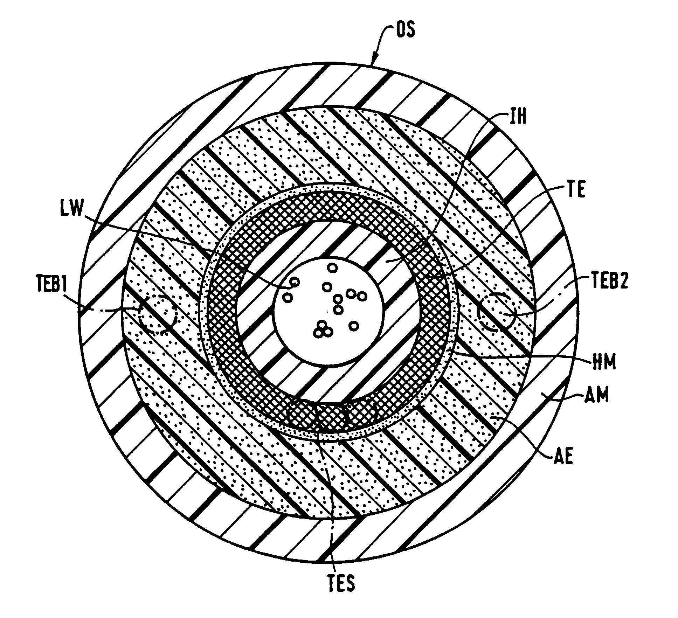

Die Erfindung und ihre Weiterbildungen werden anhand einer Zeichnung näher erläutert, in der im Querschnitt ein erfindungsgemäßes Kabel als Ausführungsbeispiel dargestellt ist. In der Figur ist ein optisches Seekabel OS gezeichnet, das in seiner Kabelseele eine (ggf. mehrlagige) Innenhülle IH aufweist, in deren Innerem eine Anzahl von Lichtwellenleitern LW angeordnet ist. Diese Lichtwellenleiter LW sind üblicherweise in einer hier nicht dargestellten weichen Füllmasse eingebettet. Darüber ist eine Lage aus zugfestem Material TE vorgesehen, wobei hierfür bevorzugt Kunststoffmaterialien, wie Aramidgarne oder dergleichen verwendet werden. Danach folgt eine Schmelzkleberschicht HM Außen ist ein ein- oder mehrlagiger Außenmantel AM vorgesehen. Die vorstehend beschriebenen Elemente LW, IH, TE, HM und AM bilden die Grundstruktur des optischen Seekabels OS, d.h. diese Elemente wären an sich ausreichend, um übertragungs-, verlegungs- und betriebstechnisch die volle Funktionsfähigkeit des optischen Seekabels OS zu gewährleisten.

Infolge der praktisch metallfrei aufgebauten Grundstruktur des optischen Seekabels OS hat dieses ein geringes spezifisches Gewicht, das unter dem Wert von etwa 2,1 g/cm³ liegt, so daß es zu einem Aufschwimmen kommt, d.h. das Kabel OS bettet sich nicht in den Seegrund ein, bzw. kann trotz einer während der Verlegung durchgeführten Einbettung z.B. infolge von Meeresströmungen oder dergleichen allmählich wieder an die Oberfläche des Seegrundes befördert werden.

Um dies zu verhindern, ist zusätzlich zu den Elementen LW, IH, TE, HM und AM der Grundstruktur ergänzend ein Zusatzelement AE vorgesehen, das im vorliegenden Beispiel rohrförmig ausgebildet und zwischen der Schmelzkleberschicht HM und dem Außenmantel AM angeordnet ist. Dieses Zusatzelement AE wird aus einem Material mit ausreichend hohem spezifischen Gewicht aufgebaut, d.h. es besteht ganz oder zum Teil aus derartigen relativ schweren Materialien. Dem Zusatzelement AE kommt, was die Festigkeit- und Übertragungseigenschaften des Kabels OS angeht, keine zusätzliche Aufgabe zu. Es dient vielmehr allein der Erhöhung des spezifischen Gewichtes. Insgesamt sollte das spezifische Gewicht des Zusatzelementes AE zweckmäßig größer als 3,5, vorzugsweise größer als 4 g/cm³ gewählt werden. Als Materialien kommen insbesondere Metalloxide in Frage, die im allgemeinen recht hohe spezifische Gewichte aufweisen. Bevorzugt kann Bleioxid ("Bleiglätte"-spez. Gewicht 9,3 g/cm³) oder Eisenoxid (spez. Gewicht 5,4 g/cm³) verwendet werden. Auch der Einsatz von Sintermassen (z.B. Titanatmassen - spez. Gewicht 3,5 - 5,3 g/cm³), ggf. auch gemischt mit entsprechenden Metalloxiden, ist denkbar.

Während die Grundstruktur also die Elemente LW, IH, TE, HM und AM ein spezifisches Gewicht γ < 2,1 g/cm³ aufweist, wird durch die Anordnung des Zusatzelementes AE das spezifische Gewicht des gesamten Kabels OS soweit erhöht, daß dieses mindestens bei γ > 2,1 g/cm³ liegt. Vorzugsweise sollte der Wert für γ des gesamten optischen Kabels OS bei mindestens γ = 2,3 g/cm³ liegen, wobei ein Bereich zwischen 2,4 und 3,0 g/cm³ besonders zweckmäßig ist.

Es ist vorteilhaft, für den Aufbau des Zusatzelementes AE keine metallischen Teile (z.B. Drähte oder dergleichen) zu verwenden, weil derartige Elemente bei Seekabeln durch Korrosion in Mitleidenschaft gezogen werden können. Außerdem sind Metall enthaltende, also nicht dielektrische Kabelaufbauten dann von Nachteil, wenn eine leichte Ortung derartiger Kabel unerwünscht ist.

Als Materialien für den Aufbau des Zusatzelementes AE kommen insbesondere pulverförmige Materialien, wie die bereits erwähnten Metalloxide, bzw. Sinterwerkstoffe in Frage. Um trotzdem eine geschlossene Konsistenz für das Zusatzelement AE zu gewährleisten, ist es zweckmäßig, diese Materialien in eine Matrix einzubetten, wobei für diese Matrix insbesondere Thermoplaste wie z.B. Polyethylen, Polyvinylchlorid, thermoplastische Olefine oder thermoplastische Elastomere geeignet sind. Auf diese Weise läßt sich das rohrförmige Zusatzelement AE beim Herstellungsvorgang des Kabels OS durch Extrusion auf die Kabelseele aufbringen und das Zusatzelement AE ist selbst auch ausreichend elastisch, druckstabil und bildet eine gute Unterlage für den aufzubringenden Außenmantel AM.

Das der Beschwerung des Kabels dienende Material (z.B. das Metalloxid) des Zusatzelemtes AE sollte mindesten 50 Gew%, vorzugsweise zwischen 60 und 90 Gew%, des Zusatzelementes ausmachen. Der Rest wäre dann im wesentlichen jeweils Matrixmaterial.

Es ist auch möglich, das Zusatzelement AE in Form von Strängen oder dergleichen auszubilden und diese auf dem darunterliegenden Teil der Kabelseele aufzuseilen, was in der Figur durch die strichpunktiert gezeichneten Stränge TES angedeutet ist.

Schließlich ist es ggf. auch möglich, in das Zusatzelement AE weitere zugfeste Elemente mit einzubetten, wie diese durch die vorzugsweise ebenfalls aus Kunststoffmaterial bestehenden Stränge TEB1 und TEB2 angedeutet ist, die diametral gegenüberliegend in dem Zusatzelement AE angeordnet sind. Diese zugfesten Elemente TEB1 und TEB2 bestehen zweckmäßig aus Aramidgarnen, Kohlenstoffasern, LCP oder dergleichen, d.h. aus nichtleitenden Teilen. Damit ist auch in dieser Konfiguration ein volldielektrischer Aufbau des gesamten optischen Kabels OS gewährleistet.

Es ist zweckmäßig, das Zusatzelement AE innerhalb des Außenmantels AM anzubringen und zwar bevorzugt unmittelbar unterhalb des Außenmantels AM. Dies hat den Vorteil, daß wegen des größeren Durchmesserbereichs bei einer bestimmten Wandstärke des Zusatzelementes AE ein besonders großer Einfluß auf das spezifische Gewicht des Gesamtkabels genommen werden kann.

Der Innenaufbau, d.h. die Struktur in der die Lichtwellenleiter LW angeordnet sind, kann in vielfacher Weise abgewandelt werden, d.h. es muß sich nicht wie dargestellt um einen Maxibündelaufbau handeln, bei dem innerhalb eines Rohres IH mehrere Lichtwellenleiter lose in einer Füllmasse angeordnet sind. Es ist für die Lichtwellenleiter auch ein Lagenaufbau, z.B. aufgeseilt auf ein zugfestes Element, ein Aufbau in Form eines Kammerkabels oder dergleichen denkbar.

## Patentansprüche

1. Nicht aufschwimmendes optisches Seekabel (OS) mit einem Kabelaufbau, dessen Grundstruktur (LW, IH, TE, AM) wegen des niedrigen spezifischen Gewichtes ein Aufschwimmen nicht verhindert, wobei im Kabel (OS) mindestens ein Zusatzelement (AE) vorgesehen ist, dessen spezifisches Gewicht > 2,1 g/cm³ gewählt ist und das ausreichend Gewicht aufweist, um das Aufschwimmen des Kabels (OS) zu verhindern,
**dadurch gekennzeichnet,**
daß das Zusatzelement (AE) mindestens ein Metalloxid enthält.

2. Optisches Seekabel nach Anspruch 1,
**dadurch gekennzeichnet,**
daß das Zusatzelement (AE) Bleioxid enthält

3. Optisches Seekabel nach Anspruch 1 oder 2,
**dadurch gekennzeichnet,**
daß das Zusatzelement (AE) Eisenoxid enthält

4. Optisches Seekabel nach einem der vorhergehenden Ansprüche,
**dadurch gekennzeichnet,**
daß das Zusatzelement (AE) eine Sintermasse enthält

5. Optisches Seekabel nach einem der vorhergehenden Ansprüche,
**dadurch gekennzeichnet,**
daß das spezifische Gewicht des gesamten optischen Kabels (OS) > 2,3 g/cm³ gewählt ist

6. Optisches Seekabel nach einem der vorhergehenden Ansprüche,
**dadurch gekennzeichnet,**
daß das spezifische Gewicht der Grundstruktur (LW, IH, TE, HM, AM) des optischen Kabels, d.h. ohne das Zusatzelement (AE), < 2,1 g/cm³ liegt.

7. Optisches Seekabel nach einem der vorhergehenden Ansprüche,
**dadurch gekennzeichnet,**
daß das spezifische Gewicht des Zusatzelementes (AE) >3,5, vorzugsweise > 4 g/cm³ gewählt ist

8. Optisches Seekabel nach einem der vorhergehenden Ansprüche,
**dadurch gekennzeichnet,**
daß das Zusatzelement (AE) mindestens einen in eine Matrix eingebettete pulverförmigen Stoff enthält

9. Optisches Seekabel nach Anspruch 8,
**dadurch gekennzeichnet,**
daß die Matrix aus einem thermoplastischen Materiel besteht.

10. Optisches Seekabel nach einem der vorhergehenden Ansprüche,
**dadurch gekennzeichnet,**
daß das Zusatzelement (AE) rohrförmig ausgebildet ist.

11. Optisches Seekabel nach einem der vorhergehenden Ansprüche,
**dadurch gekennzeichnet,**
daß das Zusatzelement (AE) strangförmig ausgebildet ist.

12. Optisches Seekabel nach einem der vorhergehenden Ansprüche,
**dadurch gekennzeichnet,**
daß das Zusatzelement (AE) innerhalb, vorzugsweise unterhalb, eines Außenmantels (AM) angeordnet ist.

## Claims

1. Non-rising submarine optical cable (OS) with a cable construction of which the basic structure (LW, IH, TE, AM), because of the low specific weight, does not prevent rising up, provision being made in the cable (OS) for at least one additional element (AE) of which the specific weight is selected to be > 2.1 g/cm³ and which has sufficient weight to prevent the rising up of the cable (OS), characterized in that the additional element (AE) contains at least one metal oxide.

2. Submarine optical cable according to Claim 1, characterized in that the additional element (AE) contains lead oxide.

3. Submarine optical cable according to Claim 1 or 2, characterized in that the additional element (AE) contains iron oxide.

4. Submarine optical cable according to one of the preceding claims, characterized in that the additional element (AE) contains a sintered compound.

5. Submarine optical cable according to one of the preceding claims, characterized in that the specific weight of the entire optical cable (OS) is selected to be > 2.3 g/cm³.

6. Submarine optical cable according to one of the preceding claims, characterized in that the specific weight of the basic structure (LW, IH, TE, HM, AM) of the optical cable, that is to say without the additional element (AE), lies below 2.1 g/cm³.

7. Submarine optical cable according to one of the preceding claims, characterized in that the specific weight of the additional element (AE) is selected to be > 3.5, preferably > 4 g/cm³.

8. Submarine optical cable according to one of the preceding claims, characterized in that the additional element (AE) contains at least one powdered material embedded in a matrix.

9. Submarine optical cable according to Claim 8, characterized in that the matrix consists of a thermoplastic material.

10. Submarine optical cable according to one of the preceding claims, characterized in that the additional element (AE) is of tubular design.

11. Submarine optical cable according to one of the preceding claims, characterized in that the additional element (AE) is of strand-shaped design.

12. Submarine optical cable according to one of the preceding claims, characterized in that the additional element (AE) is arranged within, preferably underneath, an outer sheath (AM).

## Revendications

1. Câble optique sous-marin (OS), non flottant, comportant une structure de câble, que la masse volumique petite de la structure de base (LW, IH, TE, AM) n'empêche pas de flotter, au moins un élément supplémentaire (AE) , dont la masse volumique est choisie supérieure à 2,1 g/cm³ et dont le poids est suffisant pour empêcher la flottaison du câble (OS), étant prévu dans le câble (OS),
caractérisé par le fait que
l'élément supplémentaire (AE) contient au moins un oxyde métallique.

2. Câble optique sous-marin selon la revendication 1,
caractérisé par le fait que
l'élément supplémentaire (AE) contient de l'oxyde de plomb.

3. Câble optique sous-marin selon la revendication 1 ou 2,
caractérisé par le fait que
l'élément supplémentaire (AE) contient de l'oxyde de fer.

4. Câble optique sous-marin selon l'une quelconque des revendications précédentes,
caractérisé par le fait que
l'élément supplémentaire (AE) contient une masse frittée.

5. Câble optique sous-marin selon l'une quelconque des revendications précédentes,
caractérisé par le fait que
la masse volumique de l'ensemble du câble optique (OS) est choisie supérieure à 2,3 g/cm³.

6. Câble optique sous-marin selon l'une quelconque des revendications précédentes,
caractérisé par le fait que
la masse volumique de la structure de base (LW, IH, TE, HM, AM) du câble optique, à savoir sans l'élément supplémentaire (AE), est inférieure à 2,1 g/cm³.

7. Câble optique sous-marin selon l'une quelconque des revendications précédentes,
caractérisé par le fait que
la masse volumique de l'élément supplémentaire (AE) est choisie supérieure à 3,5 g/cm³, de préférence supérieure à 4 g/cm³.

8. Câble optique sous-marin selon l'une quelconque des revendications précédentes,
caractérisé par le fait que
l'élément supplémentaire (AE) contient au moins une matière pulvérulente incorporée dans une matrice.

9. Câble optique sous-marin selon la revendication 8,
caractérisé par le fait que
la matrice est constituée d'une matière thermoplastique.

10. Câble optique sous-marin selon l'une quelconque des revendications précédentes,
caractérisé par le fait que
l'élément supplémentaire (AE) est de forme tubulaire.

11. Câble optique sous-marin selon l'une quelconque des revendications précédentes,
caractérisé par le fait que
l'élément supplémentaire (AE) est réalisé sous la forme de cordons.

12. Câble optique sous-marin selon l'une quelconque des revendications précédentes,
caractérisé par le fait que
que l'élément supplémentaire (AE) est disposé à l'intérieur d'une gaine extérieure (AM), de préférence en dessous de cette dernière.
